# EUROPÄISCHE PATENTSCHRIFT

(11) **EP 2 460 743 B1**
(45) Veröffentlichungstag und Bekanntmachung des Hinweises auf die Patenterteilung: **25.09.2013**
(21) Anmeldenummer: 11009409.1
(22) Anmeldetag: 28.11.2011
(51) Int. Cl.: B65G 1/04

(54) **Übergabezone zum Übergeben von Warenpaletten**
Transfer zone for transferring goods pallets
Zone de transfert pour le transfert de palettes de marchandises

(30) Priorität: 02.12.2010 AT 20012010
(43) Veröffentlichungstag der Anmeldung: 06.06.2012
(73) Patentinhaber: LTW Intralogistics GmbH, 6961 Wolfurt (AT)
(72) Erfinder: Sohm, Rainer, Ernst, Ing., 6850 Dornbirn (AT); Gerber, Urs Ing., 6900 Bregenz (AT); Eberle, Konrad Dipl.-Ing., 6900 Bregenz (AT)
(74) Vertreter: Gangl, Markus

(56) Entgegenhaltungen:
- EP-A1- 2 119 643
- DE-A1- 19 946 248
- DE-A1-102007 013 237

## Beschreibung

Die Erfindung betrifft eine Übergabezone zum Übergeben von Warenpaletten zwischen einem Lieferfahrzeug und einem, insbesondere automatischen, Regallager, mit einem zumindest teilweise überdachten Zulieferbereich zum Zuliefern von Warenpaletten durch einen Bediener, zumindest einer Übergabestelle, in welcher die Warenpaletten zwischen dem Zulieferbereich und dem Regallager übergebbar sind und zumindest einem Regalbediengerät, durch das Warenpaletten zwischen der zumindest einen Übergabestelle und Lagerplätzen im Regallager transportierbar sind.

Ein kritischer Bereich in vielen Logistiksystemen sind die Übergabezonen von Waren zwischen Transportportmitteln wie LKW und den Firmen (mit angeschlossenen Regallagem). In diesen Zonen erfolgt meist das Umladen, Etikettieren, Erfassen, Zuteilen, Zwischenlagern bzw. Puffern, usw. der Waren. Diese Waren sind meist auf Paletten angeordnet und sind wesentlicher Teil einer gesamten Logistikkette. Als Warenpaletten können sämtliche standardisierten Transporteinheiten wie beispielsweise diverse Formen von Paletten, Gitterboxen, Kühlboxen oder Ähnliches angesehen werden.

Immer wieder kommt es vor, dass Lieferfahrzeuge wie LKW aufgrund von Staus oder sonstigen dispositiven Gründen vor oder nach den eigentlich vorgesehenen Warenannahmezeiten bei Firmen eintreffen oder dass während der Öffnungszeiten zu viele Lieferfahrzeuge gleichzeitig eintreffen, was für die Lieferanten dann lange Wartezeiten zur Folge hat. Will ein Hochregallager- bzw. Firmenbetreiber diesen natürlich vorkommenden Spitzen entgegenwirken, so kann dies meist nur durch die Anstellung eines oder mehrerer zusätzlicher Wareneingangsmitarbeiter entschärft werden, was allerdings erhebliche Mehrkosten bedeutet. Auch müssen immer wieder Mitarbeiter über die Normalarbeitszeit hinaus in der Firma bleiben, um die Waren eines verspätet eintreffenden Lieferfahrzeugs zu übernehmen bzw. um ein noch dringend zu versendendes Paket dem erst kurz vor Büroschluss verständigten Paketdienstfahrer zu übergeben.

Um in diesen kritischen Übergangszonen einen reibungslosen Ablauf zu garantieren und Rückstauungen bzw. Überstunden zu vermeiden, sind zum einen Pufferzonen für die angelieferten und abzuholenden Waren nötig, zum anderen sind flexiblere Waranannahme bzw. Warenabholungszeiten erforderlich.

Dazu ist beispielsweise aus der EP 2 119 643 A1, die eine Übergabezone gemäß dem Oberbegriff des Anspruchs 1 offenbart, ein Versandeinheitenverteilsystem bekannt, wobei eine Eingangskontrolle der Packeinheiten noch vor der Einlagerung der Versandeinheit in das Zwischenlager durchgeführt wird. In diesem Lagersystem sind Eingangspufferzonen und Ausgangspufferzonen vorgesehen. Auch Prüfstationen mit diversen Sensoreinheiten sind in diesem Zwischenterminal vorgesehen. Nachteilig bei einem solchen Lagersystem ist, dass immer geschultes Personal im Bereich des Zwischenterminals arbeiten muss. Während also durch einen Lagerarbeiter die Kommissionierung erfolgt, muss der Zulieferer (LKW-Fahrer) warten, da er nur die Tätigkeit des Abladens und Aufladens auf den LKW durchführen kann und darf. Somit ist bei diesem Lagersystem nach dem Stand der Technik hoher Personalaufwand im Lager erforderlich, während der Lieferant, insbesondere der LKW-Fahrer, unausgelastet ist. Da in diesen Bereichen immer ein Fülle von unterschiedlichen Warenpaletten frei zugänglich herumstehen, sind hier immer wieder Diebstähle zu verzeichnen.

Auch aus der EP 1 767 472 A1 geht eine ähnliche Kommissionieranlage hervor, wobei fördertechnische Anschlüsse, ein Kommissionierplatz, mindestens ein Pufferspeicher in der Nähe des Kommissionierplatzes, eine Zuführeinrichtung zum Kommissionierplatz für leere Kundenbehälter und eine Abführeinrichtung für fertig kommissionierte Kundenbehälter vorgesehen sind. Zur Erleichterung der Versandtätigkeit können sämtliche Kundenbehälter eines Auftrages unmittelbar aufeinanderfolgend an den Versand gegeben werden, um beispielsweise auf einen LKW zum Abtransport verladen zu werden. Hierbei handelt es sich jedoch um eine firmeninterne Kommissionieranlage, welche für Lieferanten nicht zugänglich ist.

Aus der EP 1 358 117 B1 ist eine Vorrichtung zur Lagerung und Übergabe von Waren in Kleingebinden als in Verkehrsflächen aufzustellendes selbständiges turmartiges Gebäude gezeigt. Bei dieser Vorrichtung geht es im Wesentlichen um die Funktion von Lagerplätzen als Art Schließfach. Es können in dieser Vorrichtung keine großen Warenpaletten (mittels Transportmitteln in Form von Flurförderfahrzeugen) ein- und ausgelagert werden. Zudem ist das Einbringen der einzelnen Schubfächer relativ umständlich. Weiters kann es zu Fehlbedienungen kommen, wenn ein Regalbediengerät eine Lagerbox anfahren will, von welcher ein Bediener gerade eine Box entnimmt oder hineinstellt.

Die DE 199 46 248 A1 zeigt ein Hochregal-Stückgutlager mit mindestens einem Regalbedienzeug und einem jeweils von diesem bedienten Containerförderer. Dabei können Lastwagen an Andocktoren andocken und die Container vollautomatisch an eine Containerrollverkehrsfläche übergeben. Im Bereich dieser Fläche können nur regallagerinterne Arbeiter ihre Arbeit verrichten. Nachteilig dabei ist, dass diese Rollcontainer lagerhausinterne Transportgebinde sind, die zudem beim Abholen der Waren wieder händisch entladen werden müssen und im Lagerhaus zurückbleiben. Unter anderem aufgrund des ungehinderten Zutritts für die Anlieferer bzw. Abholer kann leicht falsche Ware in einen falschen LKW verladen werden und auch Diebstahl kann nicht sicher ausgeschlossen werden.

Die Aufgabe der vorliegenden Erfindung besteht daher darin, ein gegenüber dem Stand der Technik verbessertes Lagersystem mit verbesserten Übergabezonen zu schaffen. Dabei sollen bei Firmen oder Terminals, bei denen ein automatisches Hochregellager vorhanden/geplant ist, dieses besser genutzt werden können. Insbesondere sollen die Anliefer- bzw. Abholzeiten deutlich über die normalen Öffnungszeiten des Hochregalbetreibers hinaus erweitert werden. Weiters sollen Fehlfunktionen bei der Übergabe vom Bediener an ein automatisches Regallagersystem vermieden werden.

Dies wird für eine Übergabezone mit den Merkmalen des Oberbegriffes von Anspruch 1 dadurch gelöst, dass der Zulieferbereich auch als Abholbereich zum Abholen von Warenpaletten durch den Bediener ausgebildet ist, wobei Warenpaletten vom Regalbediengerät zur Abholung an die zumindest eine Übergabestelle transportierbar sind, dass dieser Zuliefer- und Abholbereich durch einen abschließbaren Zugang vor unberechtigtem Zutritt gesichert ist, wobei der Zugang durch den Bediener über eine Zutrittsautorisierungsvorrichtung öffenbar ist, und dass in der Übergabezone dem Bediener ein mit einem Lagerverwaltungsrechner verbundenes Eingabeterminal zur Verfügung steht, wobei das Eingabeterminal eine Tastatur oder einen Touchscreen aufweist. Dadurch sind im selben gesicherten und von einem Lieferanten zugänglichen Bereich die Zulieferung und die Abholung von Warenpaletten möglich.

Bevorzugt kann vorgesehen sein, dass die Zutrittsautorisierungsvorrichtung in Form einer, vorzgusweise mit einem Magnetstreifen ausgestatteten, Chipkarte oder einer Tastatur zur Codeeingabe ausgebildet ist, durch die der Zugang öffenbar ist. Natürlich soll nicht ausgeschlossen sein, dass auch ein normaler Schlüssel als ausreichende Autorisierung dienen kann.

Gemäß einem bevorzugten Ausführungsbeispiel der vorliegenden Erfindung kann vorgesehen sein, dass der abschließbare Zugang durch eine Zugangskontrolleinheit steuerbar ist, wobei die zugangskontrolleinheit den Zugang des Zuliefer- und Abholbereichs für einen weiteren, zweiten Bediener erst dann freigibt, wenn die Zugangskontrolleinheit registriert dass der erste Bediener den Zuliefer- und Abholbereich durch den Zugang verlassen hat. Dieses Verlassen kann durch Bewegungssensoren im Bereich der Zugangstür oder durch entsprechende Eingabe eines Austrittscodes (oder mit Chipkarte) zum Öffnen der Tür registriert werden. Auch ist es grundsätzlich denkbar, dass ein vom Zugang separater Ausgang vorgesehen. Besonders bevorzugt kann vorgesehen sein, dass ein Öffnen des Zugangs für einen zweiten Bediener erst dann möglich ist, wenn der Ausgang/Zugang geöffnet wurde, der erste Bediener durch den Ausgang/Zugang hindurch geschritten ist (Bewegungssensor) und der Ausgang/Zugang wieder geschlossen wurde.

Um einen noch höheren Sicherheitsstandard der erfindungsgemäßen Selbstbedienungs-Übergabezone zu garantieren, kann besonders bevorzugt vorgesehen sein, dass die Zugangskontrolleinheit mit dem Regalbediengerät und/oder einer bedienerseitigen Schranke der zumindest einen Übergabestelle und/oder einer Belegungserkennungsvorrichtung der zumindest einen Übergabestelle in signaltechnischer Verbindung steht und dass die Zugangskontrolleinheit den Zugang des Zuliefer- und Abholbereichs für einen weiteren, zweiten Bediener erst dann freigibt, wenn das Regalbediengerät sämtliche zugelieferten Warenpaletten aus der zumindest einen Übergabestelle abtransportiert hat oder wenn jede Übergabestelle mit darin befindlichen Warenpaletten z. B. durch einen bedienerseitigen Schranken vor Zugriff durch den zweiten Bediener gesichert ist oder wenn jeder unberechtigte Zugriff durch den zweiten Bediener auf eine Warenpalette in einer Übergabestelle durch die Belegungserkennungsvorrichtung erkennbar bzw. registrierbar ist. Somit kann garantiert werden, dass nach dem Übergeben bzw. Abholen durch einen Bediener ein nachfolgender Bediener nicht die vorher eingebrachten Waren beschädigen oder gar stehlen kann. Es ist somit ein (sicherheitstechnisch) abgegrenzter Bereich für ein selbständiges Ein- und Auslagern von standardisierten Transporteinheiten - mithin eine allen Sicherheitsstandards genügende Selbstbedienungs-Übergabezone - gegeben.

Besonders bevorzugt kann vorgesehen sein, dass die Zugangskontrolleinheit den Zutritt für einen "neuen" Bediener erst dann erlaubt, wenn zu den grundsätzlich erforderlichen Freigabekriterien (Bediener hat Übergabebereich verlassen, Warenpalette ist nicht mehr für "neuen" Bediener zugänglich) noch die weitere Kriterien (z. B. Bewegungsmelder nimmt seit bestimmter Zeit keine Bewegung im Übergabebereich mehr wahr, Tor bei der Laderampe ist geschlossen, usw.) erfüllt sind.

Weiters kann bevorzugt vorgesehen sein, dass die Belegungserkennungsvorrichtung in Form einer Lichtschranke ausgebildet ist, die die Belegung zumindest einer Übergabestelle überwacht, wobei bei Belegung ein entsprechendes Signal an die Zugangskontrolleinheit ausgebbar ist. Diese Belegungserkennungsvorrichtung dient somit vor allem dazu, dass - wenn kein bedienerseitiges Tor vorgesehen ist - zuerst der Abtransport der eingestellten Warenpalette erfolgen sollte, wonach erst der Zutritt für einen nächsten Bediener gestattet ist. Es muss allerdings nicht zuerst der Abtransport erfolgen, wenn der Belegungserkennungsvorrichtung sozusagen als Zugriffsüberwachung fungiert. D. h., wenn sich ein neuer, zweiter Bediener an einer von vorher bereits belegten Übergabestelle zu schaffen macht, gibt die Belegungserkennungsvorrichtung bzw. die Lichtschranke (Bewegungsmelder) ein Warnsignal aus. Somit muss für den Zutritt eines zweiten Bedieners nicht unbedingt das Regalbediengerät die Warenpalette bereits übernommen haben oder die Warenpalette durch einen Schranken abgesperrt sein. Vielmehr dient die Belegungserkennungsvorrichtung selbst als eine Art "nicht-mechanische" Sicherheitsschranke.

Gemäß einem bevorzugten Ausführungsbeispiel kann vorgesehen sein, dass die Übergabestellen als Übergabefächer ausgebildet sind. Dadurch kommt es bereits beim Einstellen der Warenpaletten in die Übergabefächer zu einer Konturkontrolle und es ist garantiert, dass keine Warenpaletten mit Überlänge in des Regallager gelangen können, welche dann von der Fördertechnik nicht mehr fehlerfrei verarbeitet werden können. Um noch besser zu garantieren, dass die Warenpaletten kein Übermaß haben und in weiterer Folge von der Fördertechnik des Hochregallagers manipuliert werden können, kann besonders bevorzugt vorgesehen sein, dass die Übergabefächer nischenförmig und nur so groß ausgebildet sind, sodass keine zu großen (zu breiten, zu hohen) Warenpaletten eingebracht werden können. Die nischenförmigen Übergabestellen bilden somit Messbegrenzungen zur Konturkontrolle einer einstellbaren Warenpalette.

Alternativ können die Übergabestellen als Rollbahnen ausgebildet sein. Im Bereich der Warenaufgabe auf der Rollbahn kann durch den betriebsfremden Anlagenbediener dabei die Etikettierung der Palette erfolgen. Anschließend gelangt die Palette über die Rollbahn in einen elektrischen oder mechanischen Konturkontrollbereich. Ist die Kontur nicht in Ordnung, wird die Palette wieder zum Bediener zurück befördert. Ist die Kontur dagegen in Ordnung, passiert die Palette den Konturkontrollbereich und gelangt zur hochregallagerinternen Patettenidentifizierung (beispielsweise über Barcodelesegeräte, RFID-Erkennung auf dem Hubschlitten oder einem Querverschiebewagen) und kann dort gepuffert bzw. gelagert werden.

Ein bevorzugtes Ausführungsbeispiel kann vorsehen, dass die Übergabefächer mittels eines regallagerseitigen Tores einerseits und des bedienerseitigen Tores andererseits abschließbar sind. Dadurch ist zum einen das Regallager sicherheitstechnisch komplett vom Zuliefer- und Abholbereich getrennt und ein nicht im Lager selbst beschäftigter LKW-Fahrer kann beispielsweise Einlagerungen in die Übergabefächer vornehmen und nach Abschluss der Einlagerung entsprechend die Tore schließen, sodass anschließend das Regalbediengerät die eingebrachten Warenpaletten im Regallager verstauen kann. In umgekehrter Weise kann vom Regalbediengerät ein vom LKW-Fahrer gewünschtes Gut in das Übergabefach geliefert werden, wobei nach Schließen des regallagerseitigen Tores der Bediener (LKW-Fahrer) seine gewünschten Warenpaletten übernehmen kann. Das bedienerseitige Tor (und auch die Konturkontrolle) könnte hierbei grundsätzlich auch in Form eines Lichtgitters ausgebildet sein.

Um ein besonders sicheres und geregeltes Manipulieren mit den Warenpaletten und den Übergabefächem zu garantieren, weisen die Übergabefächer bzw. die Tore bevorzugt einen Schließmechanismus auf, der ein Öffnen des regallagerseitigen Tores nur dann erlaubt, wenn das bedienerseitige Tor geschlossen ist. In umgekehrter Weise erlaubt der Schließmechanismus ein Öffnen des bedienerseitigen Tores nur dann, wenn das regallagerseitige Tor desselben Übergabefaches geschlossen ist. Somit kann ein nicht zum eigentlichen Regallager gehörender Bediener nie in das Regallager gelangen. Weiters ist auch die Verletzungsgefahr minimiert, da ein Bediener nie mit dem bevorzugt automatisch verfahrbaren Regalbediengerät in Kontakt geraten kann.

Gemäß einer weiteren bevorzugten Ausführungsform der vorliegenden Erfindung kann vorgesehen sein, dass das regallagerseitige Tor durch das Regalbediengerät öffenbar ist und das bedienerseitige Tor durch den Bediener öffenbar. Die Schließmechanismen können dabei elektrische und mechanische Komponenten aufweisen.

Grundsätzlich ist es möglich, dass der Lieferant/Bediener selbst ein geeignetes Transportmittel zum Bewegen der im Normalfall doch relativ großen Warenpaletten in die Übergabezone mitbringt. Bevorzugt ist allerdings vorgesehen, dass die Übergabezone zumindest ein vom Bediener betätigbares Transportmittel, vorzugsweise in Form eines Hubstaplers, umfasst, mit dem die Warenpaletten zwischen Lieferfahrzeug und Übergabestelle transportierbar sind.

Um ein möglichst einheitliches Bedien- und Steuerkonzept zu erreichen, kann bevorzugt vorgesehen sein, dass der Lagerverwaltungsrechner (Zentralcomputer) die Zugangskontrolleinheit bzw. den Schließ- bzw. Verriegelungsmechanismus der Tore steuert und dass der Lagerverwaltungsrechner das Regalbediengerät steuert. Somit ist eine einheitliche und sichere Automatisierung im Pufferbereich einer Übergabezone gewährleistet.

Um eine rund um die Uhr (in Selbstbedienung) benutzbare Übergabezone für palettierte Waren zu erreichen, ist bevorzugt vorgesehen, dass der Zuliefer- und Abholbereich ein vom Regallager baulich abgetrennter, überdachter Übergaberaum ist. Somit kann ein Mieter oder ein Befugter für diesen Übergaberaum komplett zeitlich entkoppelt von den Vorgängen im Regallager seine Zulieferungen und Abholungen durchführen. Auch können von den Befugten längere Wartezeiten im Bereich der Warenannahme oder Warenauslieferung durch die Nutzung dieser Selbstbedienungsübergabebereiche vermieden werden. Benutzt werden kann dieser Übergabebereich z. B. von Paketdiensten oder Nahverkehrs-LKW für die täglichen Anlieferungen. Da vom Regalbediengerät bzw. von der Fördertechnik nur Paletten bzw. palettenähnliche Transporteinheiten manipuliert werden können, ist für die Anlieferung von kleineren Wareneinheiten (z. B. von einzelnen Paketen) vorgesehen, dass in diesem Fall am Terminalrechner eine leere Rahmenpalette aus dem Hochrechallager angefordert werden kann, in welche das Paket dann gelegt wird und somit vom Regalbediengerät eingelagert werden kann.

Bevorzugt ist ein solcher Übergaberaum bzw. -bereich an ein normales Hochregallager angebaut bzw. direkt an eine Gasse des Hochregallagerblocks angebaut, sodass die Übergabestellen direkt von einem Regalbediengerät geleert bzw. befüllt werden können. Je nach vorhandenem Platzangebot kann es jedoch auch erforderlich sein, dass die Übergabebereiche nicht direkt an eine Hochregallagergasse angebaut werden können, sodass die Übergabestellen dann alternativ von einem Querverschiebewagen oder Ähnlichem geleert bzw. gefüllt werden müssen und dann durch eine kurze Fördertechnikstrecke wieder mit dem Hochregallagerblock verbunden werden.

Bevorzugt kann weiters vorgesehen sein, dass die Übergabefächer im Übergaberaum angeordnet sind, wobei die regallagerseitigen Tore der Übergabefächer den Übergaberaum zum Regallager abgrenzen. Um Missbrauch vorzubeugen sowie ein sicheres Arbeiten im Übergaberaum zu gewährleisten, kann bevorzugt vorgesehen sein, dass der Übergaberaum eine gesicherte Eingangstür aufweist, die vom Bediener nur durch Eingabe zum Beispiel eines Zugangscodes öffenbar ist.

Falls der Zulieferer die Barcodes für die Palettenidentifikation (inklusive Palettenzielangabe, Priorität, Ablaufdatum der Ware, Tracking & Tracing, usw.) der Waren nicht bereits in seiner Firma gedruckt hat, kann bevorzugt vorgesehen sein, dass im Zuliefer- und Abholbereich das vom Bediener bzw. Zulieferer bedienbare Eingabeterminal zur Erfassung und Etikettierung angelieferter Warenpaletten angeordnet ist, wobei jede Palette einzeln gekennzeichnet wird. Wenn alle Paletten in den Übergabefächem bzw. Übergabenischen stehen, kann der Bediener bzw. LKW-Fahrer mit einem Barcode-Scanner (Etikettenleser) durchgehen und ordnet durch "Abschießen" der Barcodes (zuerst Palettenbarcode, dann Übergabennischenbarcode, danach wieder Palettenbarcode und dazugehöriger Übergabefachbarcode, usw.) die jeweiligen Warenpaletten ihrem Übergabefach zu. Alternativ kann auch vorgesehen sein, dass jedes Übergabefach einen Etikettenleser aufweist, der die Daten einer eingestellten Warenpalette von einer an der Warenpalette aufgebrachten Etikette erfasst oder dass die Erfassung von einem auf dem Regalbediengerät montierten Etikettenleser bei der Lastaufnahme erfolgt.

Um die eingestellten Warenpaletten ins Hochregallager zu übergeben, schließt der Bediener händisch oder durch entsprechende Eingabe in das Eingabeterminal ein Schutzgitter (bedienerseitiges Tor) vor den Übergabefächern und gibt dem Regalbediengerät so die Freigabe, die Paletten zu übernehmen. Der Schließmechanismus ist dabei so gestaltet, dass der Bediener das Regalbediengerät gar nicht betätigen bzw. freigeben kann, solange das bedienerseitige Tor noch geöffnet ist, indem das zuvor genannte Schutzgitter dann elektrisch verriegelt wird. Nach dem automatischen Öffnen des hochregallagerseitigen Schutzgitters - bevorzugt durch das Regalbediengerät - werden die Warenpaletten vom Regalbediengerät übernommen und ihrer weiteren Verarbeitung zugeführt. Zum Beispiel können die Warenpaletten weiter im Hochregallager zwischengelagert werden und nach einer gewissen Zeit (beispielsweise am folgenden Morgen) der Wareneingangsprüfung zugeführt werden. Die Warenpaletten können aber auch weiter zu einem Zugbelade- und -entladegleis weiterbefördert werden. Eine weitere Variante kann vorsehen, dass die Ware mehrere Tage zwischengelagert wird, bis der Lieferant seine Sendung dann beispielsweise via Internetzugriff weitersendet.

Um dies alles möglichst automatisiert und zentral gesteuert durchführen zu können, kann bevorzugt vorgesehen sein, dass der Lagerverwaltungsrechner die im Eingabeterminal erfassten Daten über die Warenpaletten und die über den Etikettenleser erfassten Daten der jeweils in ein Übergabefach eingestellten Warenpalette in einer Datenbank speichert. Dadurch weiß das Lagerverwaltungssystem immer, an welchem Ort in der Übergabezone bzw. im Regallager sich eine bestimmte Warenpalette befindet. Eine weitere und feinere Warenzuordnung kann dann werktags durch die Mitarbeiter des Wareneingangs erfolgen.

Aus Sicherheitgründen kann bevorzugt vorgesehen sein, dass im Zuliefer- und Abholbereich zumindest eine Überwachungskamera und zumindest ein Bewegungssensor angeordnet ist, die die Vorgänge im Zuliefer- und Abholbereich filmen und detektieren. Diese Videokameras können dabei auch den Einlagerungs- bzw. Abholungsvorgang überwachen und dokumentieren. Falls es zu Reklamationen im Hinblick auf beschädigte Waren von Seiten des Empfängers kommt, kann aufgrund der aufgezeichneten Daten nachgeschaut werden, in welchem Zustand die Ware vom Versender eingelagert wurde (Absicherung im Hinblick auf Schadenersatzforderungen).

Schutz wird auch begehrt für ein Regallager nach Anspruch 16.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine schematische Darstellung einer Übergabezone,
- Fig. 2: eine 3D-Ansicht eines Übergaberaumes mit davor abgestelltem Lieferfahrzeug,
- Fig. 3: eine Draufsicht eines Zuliefer- und Abholbereiches,
- Fig. 4: eine 3D-Ansicht des Bereichs um die Übergabestellen,
- Fig. 5: eine 3D-Ansicht der Übergabezone vom Regallager aus gesehen,
- Fig. 6: einen am Regallager angebauten Übergaberaum bei großem Andrang,
- Fig. 7: einen nicht ausreichend gesicherten Übergaberaum und
- Fig. 8 und 9: mögliche Varianten für eine bessere Sicherung der Übergabezone.

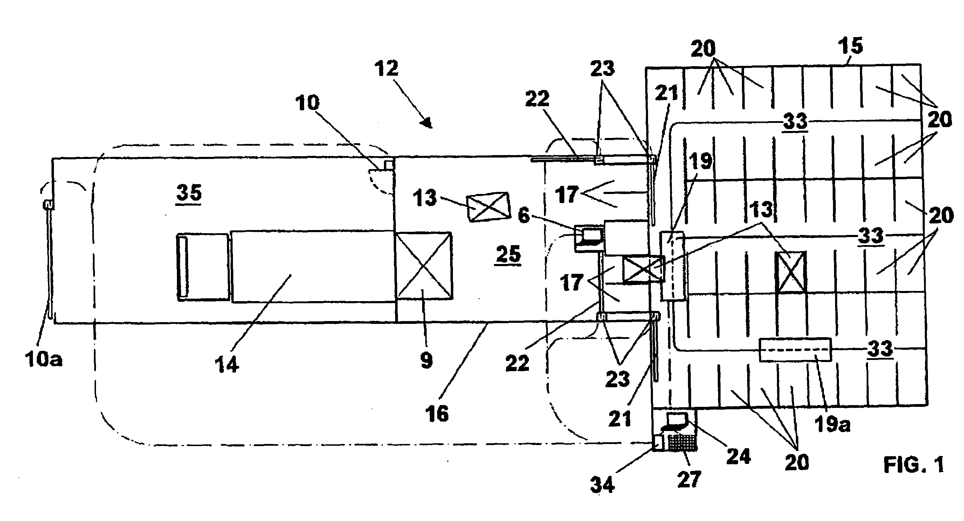

In Fig. 1 ist schematisch eine Übergabezone 12 von oben dargestellt. Eine solche Übergabezone 12 weist als Hauptbestandteile einen separaten und überdachten Übergaberaum 25, welcher an ein großes Regallager 15 angebaut ist, und einen abgegrenzten, vorzugsweise umzäunten, Vorhof 35 auf. Im Bereich, in dem der Übergaberaum 25 an das Regallager 15 angrenzt, sind mehrere Übergabestellen bzw. Übergabefächer 17 vorgesehen. In diese Übergabefächer 17 werden Warenpaletten 13 eingestellt. Wenn diese Warenpaletten 13 von einem Bediener 18 im Zuliefer- und Abholbereich 16 eingebracht werden, ist das regallagerseitige Tor 21 des Übergabefaches 17 geschlossen, während das bedienerseitige Tor 22 geöffnet ist.

Dass immer nur ein Tor 21 oder 22 geöffnet werden kann, wird durch den Schließmechanismus 23 sichergestellt. Dieser Schließmechanismus 23 sendet auch entsprechende Rückmeldesignale an die Zugangskontrolleinheit 34, welche mit dem Lagerverwaltungsrechner 24 (wenn nötig auch mit einer entsprechenden Datenbank 27) verbunden ist bzw. im Lagerverwaltungsrechner 24 integriert ist. Grundsätzlich steht die Zugangskontrolleinheit 34 zumindest mit einem der Komponenten Regalbediengerät 19, bedienerseitigem Tor 22 (und dessen Schließmechanismus 23) oder einer Belegungserkennungsvorrichtung (nicht dargestellt) in den Übergabefächem 17 in signaltechnischer Verbindung, wodurch immer gewährleistet ist, dass eine eingebrachte Warenpalette 13 vor dem Zugriff des nachfolgenden Bedieners 36 sicher ist. Hierfür kontrolliert die Zugangskontrolleinheit 34 zumindest die Eingangstür 10 des Übergaberaums 25. Zusätzlich (oder alternativ) kann diese Zugangskontrolleinheit 34 auch noch das zentrale Eingangstor 10a zum Vorhof überwachen. Im speziellen kann, nachdem das bedienerseitige Tor 22 geschlossen ist, das regallagerseitige Tor 21 geöffnet werden, wonach ein Regalbediengerät 19 die Warenpaletten 17 entnehmen kann und - beispielsweise auch über ein zwischengeschaltetes, in einer Regalgasse 33 verfahrbares weiteres Regalbediengerät 19a - zu Lagerplätzen 20 im Regallager 15 transportiert werden.

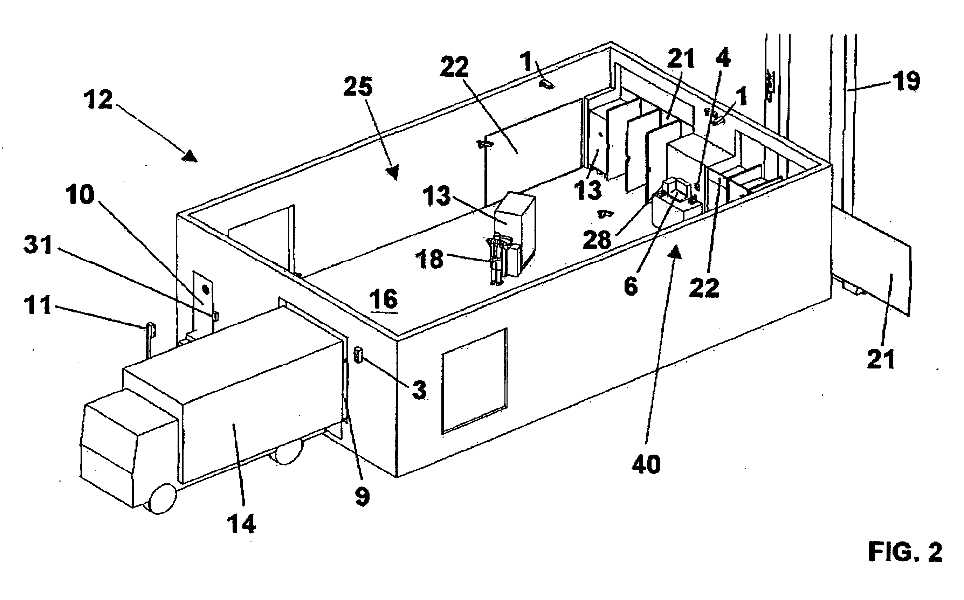

In Fig. 2 ist das Lieferfahrzeug 14 (LKW) ersichtlich, welches an der geöffneten Laderampe 9 des Übergaberaumes 25 abgestellt ist. Im Bereich dieser Laderampe 9 ist eine Signalanlage 3 (Ampel) angeordnet, die signalisiert, ob der gesamte Übergaberaum 25 betriebsbereit ist oder ob irgendein Defekt vorliegt und der Übergaberaum 25 nicht benutzt werden kann. Im Bereich der Laderampe 9 ist ein verschließbares Tor vorgesehen. Neben dieser Laderampe ist eine Eingangstür 10, wobei - um die Arbeitnehmerschutzforderungen zu erfüllen - Zutritt nur für unterwiesene Personen 18 über eine entsprechende Autorisierungsüberprüfung 31 erlaubt ist. Dabei kann ein entsprechender Zugangscode eingegeben werden, sodass sich die gesicherte Eingangstür 10 öffnet. Weiters ist im Bereich dieser Eingangstür 10 eine Signalvorrichtung 11 (Ampel) beim Ausgang vorgesehen. Wenn eine Person den Übergaberaum 25 verlassen will, so erblickt sie unmittelbar nach dem Öffnen der Ausgangstür 10 diese Signalvorrichtung 11. Mittels dieser Signalvorrichtung 11 wird der Person 18 signalisiert, ob sie die gesamte Übergabezone 12 ordnungsgemäß verlassen hat. Ordnungsgemäß heißt, dass der bevorzugt elektrische Hubstapler 8 an der Ladestation 30 für den Hubstapler 8 angeschlossen ist, dass der Barcode-Scanner 7 im Ladegerät steckt, dass das Rolltor für die Laderampe 9 und das Schutzgatter (bedienerseitiges Tor 22) geschlossen wurden usw. Dies kann alles über entsprechende Brücken in Steckern bzw. über Endschalter überwacht werden. Wenn eine Bedingung nicht erfüllt ist, leuchtet die Ampel rot, sind alle Bedingungen erfüllt und nur die Zugangstüre 10 noch nicht verriegelt, so leuchtet die Signalvorrichtung 11 gelb. Ist alles in Ordnung, leuchtet die Signalvorrichtung 11 grün. Diese Bedingungen werden bevorzugt allesamt von den Zugangskontrolleinheit 34 überwacht.

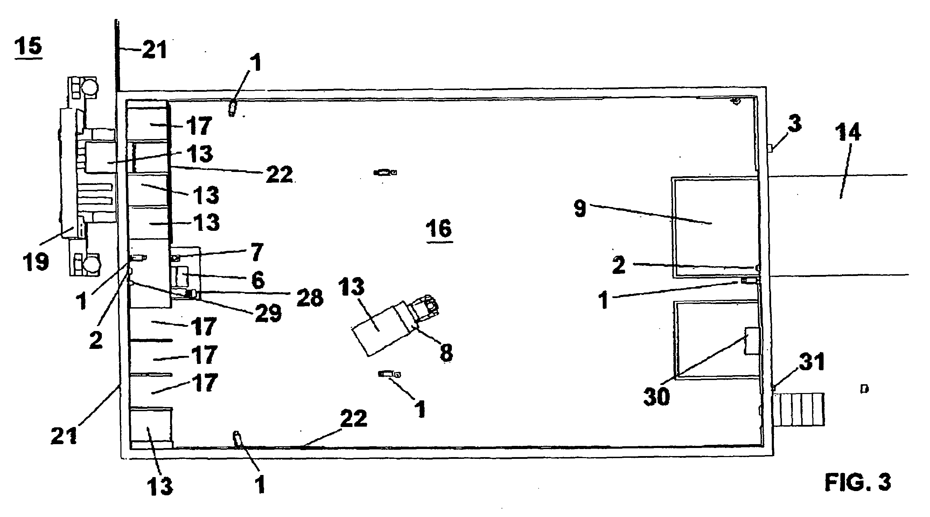

Fig. 3 zeigt eine Ansicht einer Übergabezone 12 von oben, wobei im linken Bereich das Regalbediengerät 19 beim Entnehmen einer Warenpalette 13 aus einem Übergabefach 17 dargestellt ist. Die Ausbildung dieses Regalbediengeräts 19 ist an sich beliebig, solange die Funktion der Entnahme und Einbringung einer Warenpalette 13 und eine entsprechende Weiterleitung im Regallager 15 gegeben ist (kann z. B. auch ein Querverschiebewagen sein).

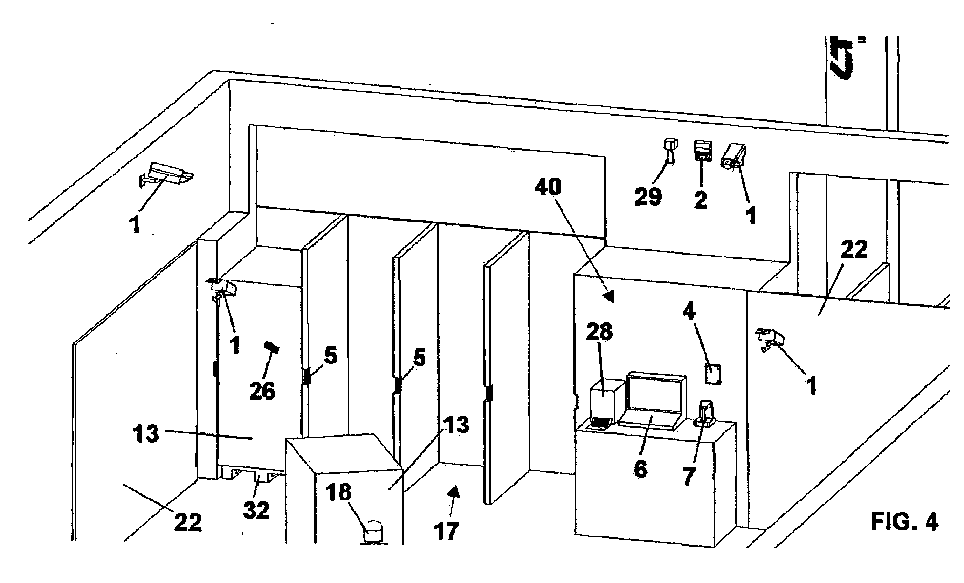

In Fig. 4 ist der Bereich der Übergabefächer 17 in einen Übergaberaum 25 dargestellt. Da dieser gesamte Übergaberaum 25 möglichst allein von einem einzigen Bediener 18 bedient werden kann und soll, müssen entsprechende Arbeitnehmerschutzbestimmungen erfüllt werden. Während der Terminalbenutzung wird der Innenraum 25 der Übergabezone 12 bzw. der ganze Zuliefer- und Abholbereich 16 mittels eines oder mehrerer Bewegungsmelder 2 überwacht. Solange sich jemand im Raum 25 bewegt, ist alles in Ordnung. Wenn sich jedoch z.B. 5 Minuten im Raum 25 nichts mehr rührt, ertönt ein Hupsignal über die Hupe 29. Daraufhin hat der Verlader (Bediener 18) noch ca. 2 Minuten Zeit, die Hupe 29 zu quittieren. Dies ist vor allem dann sinnvoll, wenn der Bediener 18 gerade mit Umräumarbeiten im LKW-Laderaum beschäftigt ist und deshalb nicht vom Bewegungsmelder 2 erfasst werden konnte. Wird innerhalb der oben genannten 2 Minuten die Hupe 29 nicht quittiert, so wird in einer ständig besetzten Stelle (Wachdienst, Portier, ...) ein Alarm ausgelöst. Die Überwachungsperson kann daraufhin die Bilder der Raumüberwachungskameras 1 auf seinem Rechner anschauen und - wenn er z.B. sieht, dass der Verlader (Bediener 18) verletzt am Boden liegt - die lokale Rettung alarmieren oder sonst jemanden vorbeischicken. Eventuell ist auch der Außenbereich 35 - ähnlich wie zuvor beschrieben - zu überwachen, was zumindest so lange erfolgen sollte, bis sich das Lieferfahrzeug 14 wegbewegt. Dazu sollte eine entsprechende LKW-Erkennung im Außenbereich bzw. im Bereich der Laderampe 9 angeordnet sein.

Wie in Fig. 4 weiters ersichtlich, befindet sich in der Nähe der Übergabefächer 17 ein Selbstbedienungsdatenerfassungsterminal 40. Dieses kann zum Beispiel bestehen aus dem eigentlichen Eingabeterminal 6 (mit Tastatur bzw. Touchscreen), einem Etikettendrucker 28 und einem Barcodescanner 7. Das Drucken von Etiketten 26 sowie die sonstige Dateneingabe kann jedoch auch im Herstellerwerk beim Versender gemacht werden. Wichtig ist jedenfalls, dass zu jeder Warenpalette 13 spätestens ab dem Zeitpunkt der Einstellung der Warenpaletten 13 in die Übergabefächer 17 eindeutige warenpalettenspezifische Daten verfügbar sind (sobald ein Barcode 26 für eine Warenpalette 13 ausgedruckt wird, sind im System die entsprechenden warenpalettenspezifischen Daten vorhanden). Anschließend hat eine Zuordnung der jeweiligen warenspezifischen Daten zu erfolgen, sodass in der Folge dann allen Warenpaletten 13, die vom automatischen Regalbediengerät 19 übernommen wurden, warenpalettenspezifische Daten zugeordnet sind. Dies kann z. B. dadurch erfolgen, dass die Barcodes 26 der in den Übergabefächem 17 stehenden Warenpaletten 13 mit Hilfe eines tragbaren Barcodescanners 7 den Barcodes 5 der jeweiligen Übergabefächer 17 zugeordnet werden. Damit wird ein Tracking & Tracing ermöglicht. Alternativ hierzu kann auch vorgesehen sein, dass z. B. das Regalbediengerät 19 mit einem automatischen Barcodescanner ausgestattet ist und die Zuordnung Warenpalette 13 zu warenpalettenspezifischen Daten erst im Zuge der Lastaufnahme durch das Regalbediengerät 19 erfolgt. Auch ist denkbar, dass statt der aufgeklebten Barcodes 26 andere Identifikationshilfen wie z. B RFID-Chips verwendet werden. Durch eine automatische Barcodescannung kann das händische Einscannen durch einen Bediener 18 entfallen und menschliche Irrtümer sind weitestgehend ausgeschlossen. Im Bereich des Eingabeterminals 6 ist auch eine Sprechanlage 4 angeordnet, mit der der Bediener 18 Kontakt zu einer ständig besetzten Stelle aufnehmen kann. Dies kann notwendig werden, wenn ein Verlader bzw. Bediener 18 einen Defekt entdeckt. Auch im Falle eines kleineren Unfalles kann hiermit Hilfe angefordert werden. Auch wenn irgendwelche Fragen bezüglich der Bedienung auftreten, kann hier nachgefragt werden. Grundsätzlich sollte am Selbstbedienungsdatenerfassungsterminal 40 von einer Datenerfassungssoftware auch eine weitere, eindeutige Autorisierungsprüfung des Benutzers 18 durchgeführt werden. Dazu kann das Terminal 40 in signaltechnischer Verbindung mit der Zugangskontrolleinheit 34 stehen.

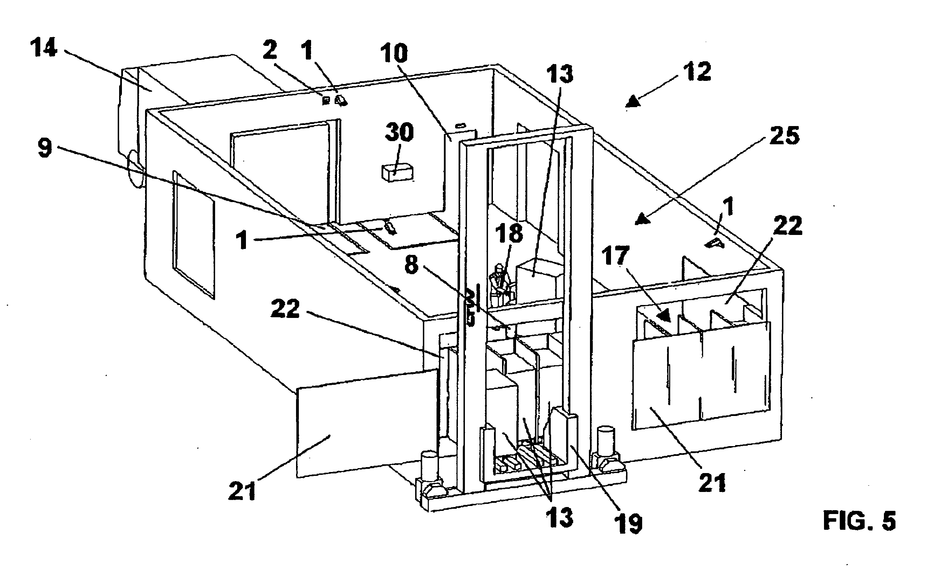

Fig. 5 zeigt einen regallagerseitigen Blick auf die Übergabezone 12. Zwischen der Laderampe 9 und der Eingangstür 10 ist dabei eine Ladestation 30 für einen elektrischen Hubstapler 8 dargestellt, mit dem ein Bediener 18 das Abladen, Aufladen und Transportieren der Warenpaletten 13 durchführen kann. Um ein einfaches und sicheres Transportieren der Warenpaletten 13 mittels eines Hubstaplers 8 zu garantieren, sind die Waren bevorzugt auf einer Euro-Palette 32 angeordnet. In dieser Fig. 5 ist auch ersichtlich, dass die regallagerseitigen Tore 21 verschieblich und die bedienerseitigen Tore 22 verschwenkbar sind. Natürlich soll nicht ausgeschlossen sein, dass diese Tore 21 und 22 auch andere Öffnungs- bzw. Schließbewegungen durchführen können. Es soll auch nicht ausgeschlossen werden, dass - im Gegensatz zur Darstellung in Fig. 5 - nur ein einziges Übemahmefach 17 in der Übergabezone 12 vorgesehen ist. Auch kann jedes einzelne Übergabefach 17 separate Tore 21 und 22 aufweisen. Ein Tor 21 oder 22 kann beliebig vielen Übernahmefächern 17 zugeordnet sein, wobei die Tore 21 und 22 nicht unbedingt jeweils gleich vielen Übergabefächem 17 zugeordnet sein müssen. Wesentlich ist, dass jedes Übergabefach 17 zumindest von einer Seite durch das entsprechende Tor 21 oder 22 bzw. einen Bereich dieses Tores 21 oder 22 geschlossen ist. Grundsätzlich könnten die Übergabestellen 17 auch in Form von Rollbahnen ausgebildet sein bzw. solche Rollbahnen aufweisen.

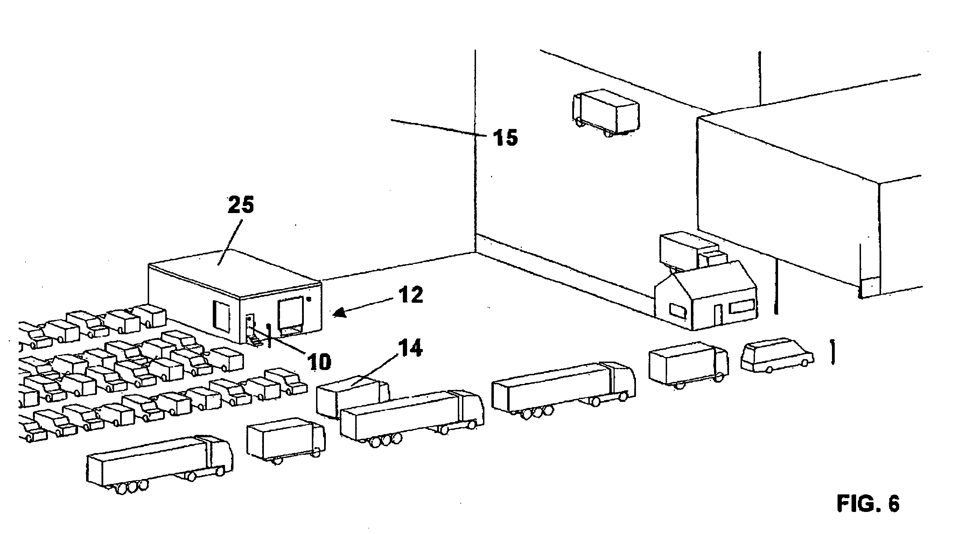

Fig. 6 zeigt eine Übergabezone 12 bei großem Andrang untertags. Es ist ersichtlich, dass ein überdachter und separater Übergaberaum 25 an ein großes Hochregallager 15 angebaut ist. Durch den 24-Stunden-Betrieb der Übergabezone 12 kann auch bei Nacht ein Fahrer 18 eines LKWs 14 Waren im Übergaberaum 25 selbsttätig an- und abladen, wodurch eine zeitliche Entkopplung von den normalen Arbeitszeiten im Regallager 15 erfolgen kann.

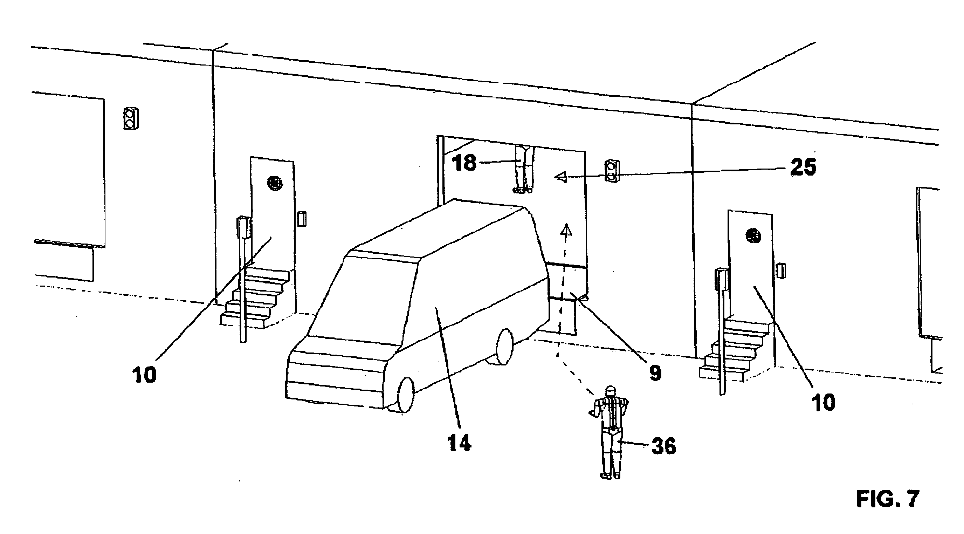

Je nach Größe des Lieferfahrzeugs 14 kann es vorkommen, dass ein vor dem Rolltor 39 bzw. der Laderampe 9 stehendes, kleines Fahrzeug die Rolltoröffnung seitlich nicht ganz verdeckt (siehe Fig. 7). Da die Übergabezone 12 aber für eine 24-Stunden-An/Ablieferung konzipiert ist, kann dieser seitlich freibleibende Spalt dazu führen, dass sich die im Terminal befindliche Person 18 nicht ganz sicher fühlt, da jederzeit damit gerechnet werden muss, dass eine fremde Person 36 durch den Spalt in den Übergaberaum 25 gelangen könnte.

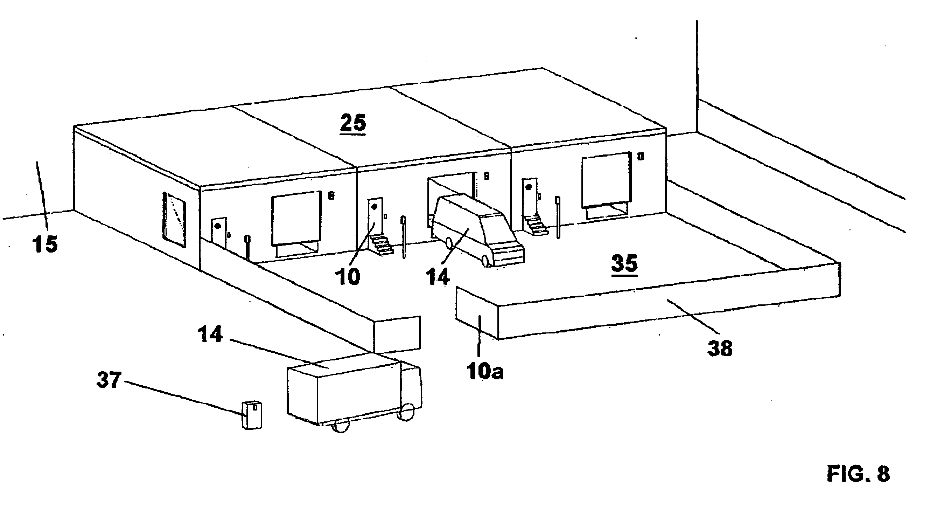

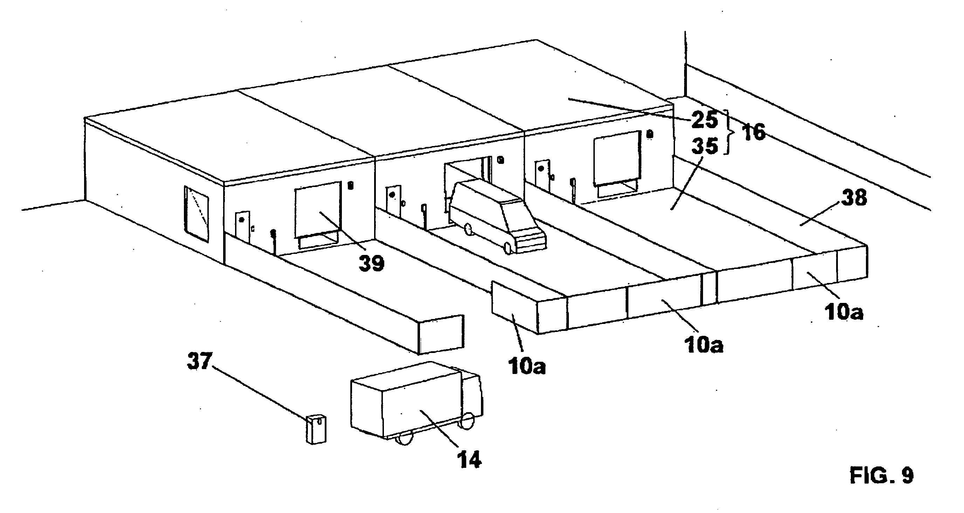

Aus diesem Grund ist es denkbar, dass der Bereich 35 vor dem Übergaberaum 25 als Teil des Zuliefer- bzw. Abholbereichs 16 ausgebildet und umzäunt (Umzäunung 38) ausgeführt und mit einer "Vorzutrittskontrolle" 37 versehen wird. Je nach gewünschtem Sicherheitslevel können hier unterschiedliche Varianten (vergleiche Fig. 8 und Fig. 9) möglich sein. Ebenfalls denkbar ist, dass der Lieferant 18 mit dem Lieferfahrzeug 14 in den überdachten und abgeschotteten Übergaberaum 25 des Zuliefer- und Abholbereichs 16 hineinfahren kann und dass Rolltor 39 nach der Einfahrt des Lieferfahrzeugs 14 geschlossen wird und ein sicheres Arbeiten dadurch gewährleistet ist. Die Rolltorsteuerung würde in diesem Fall den Personenzugang über die Eingangstür 10 ersetzen und die entsprechenden Funktionen in Verbindung mit der Zugangskontrolleinheit 34 übernehmen. Bevorzugt kann grundsätzlich vorgesehen sein, dass der Übergaberaum 25 eine gesicherte Eingangstür 10 und/oder der Zuliefer- und Abholbereich 16 ein gesichertes Eingangstor 10a aufweist, die vom Bediener 18 nur durch Eingabe eines Zugangscodes oder unter Verwendung einer Chipkarte öffenbar ist/sind.

Somit ist gemäß der vorliegenden Erfindung eine Übergabezone gezeigt, in welcher Warenpaletten 13 zwischen einem Regallager 15 und einem Zuliefer- und Abholbereich 16 übergeben werden können. Dieser Zuliefer- und Abholbereich 16 weist dabei bevorzugt einen vom Regallager 15 separaten, überdachten Übergaberaum 25 (gegebenenfalls mit Vorhof 35) auf, der nur mit entsprechender Erlaubnis betreten werden darf. In einer Übergabezone 12 werden dabei im Wesentlichen die folgenden Schritte durchgeführt:
- Vorzugsweise händisches Verbringen einer Warenpalette 13 in ein bzw. von einem Übergabefach 17 mit Durchführen einer Konturkontrolle im Übergabefach 17,
- Erfassen bzw. Eingeben warenpalettenbezogener Daten in einen Rechner 6,
- Zuteilen der erfassten Warenpalette 13 zu einem Stellplatz 20 im Regallager 15 durch einen Lagerverwaltungsrechner 24,
- Transportieren der Warenpalette 13 mittels eines Regalbediengeräts 19 vom Übergabefach zum zugeteilten Lagerplatz 20 im Regallager 15.

Diese Schritte sind natürlich entsprechend in umgekehrter Reihenfolge beim Entladen durchführbar. Bei der Abholung kann dabei vorgesehen sein, dass ein Empfänger eine automatisch generierte E-Mail oder SMS mit einem Abholcode (Barcode) erhält, wenn eine Palette 13 im Regallager 15 ankommt. Mit diesem Abholcode kann der Empfänger seine Warenpaletten 13 dann rund um die Uhr in der Übergabezone 12 abholen. Wenn der Empfänger den Übergaberaum 25 betritt, kann die gewünschte Warenpalette 13 angefordert werden, wonach das Regalbediengerät 19 die entsprechende Warenpalette 13 in einer Übergabestelle 17 bereitstellt und das bedienerseitige Tor 22 entriegelt wird.

## Patentansprüche

1. Übergabezone (12) zum Übergeben von Warenpaletten (13) zwischen einem Lieferfahrzeug (14) und einem, insbesondere automatischen, Regallager (15), mit
- einem zumindest teilweise überdachten Zulieferbereich zum Zuliefern von Warenpaletten (13) durch einen Bediener (18), wobei die Warenpaletten (13) mit einem Hubstapler (8) zwischen dem Lieferfahrzeug (14) und der Übergabestelle transportierbar sind,
- zumindest einer Übergabestelle (17), in welcher die Warenpaletten (13) zwischen dem Zulieferbereich und dem Regallager (15) übergebbar sind und
- zumindest einem Regalbediengerät (19), durch das Warenpaletten (13) zwischen der zumindest einen Übergabestelle (17) und Lagerplätzen (20) im Regallager (15) transportierbar sind,
**dadurch gekennzeichnet, dass** der Zulieferbereich auch als Abholbereich zum Abholen von Warenpaletten (13) durch den Bediener (18) ausgebildet ist, wobei Warenpaletten (13) vom Regalbediengerät (19) zur Abholung an die zumindest eine Übergabestelle transportierbar sind, dass dieser Zuliefer- und Abholbereich (16) durch einen abschließbaren Zugang (10, 10a) vor unberechtigtem Zutritt gesichert ist, wobei der Zugang (10, 10a) durch den Bediener (18) über eine Zutrittsautorisierungsvorrichtung öffenbar ist, und dass in der Übergabezone (12) dem Bediener (18) ein mit einem Lagerverwaltungsrechner (24) verbundenes Eingabeterminal (6) zur Verfügung steht, wobei das Eingabeterminal (6) eine Tastatur oder einen Touchscreen aufweist.

2. Übergabezone nach Anspruch 1, **dadurch gekennzeichnet, dass** die Zutrittsautorisierungsvorrichtung in Form einer Chipkarte oder einer Tastatur zur Codeeingabe ausgebildet ist, durch die der Zugang (10, 10a) öffenbar ist.

3. Übergabezone nach Anspruch 1 oder 2, **dadurch gekennzeichnet, dass** der abschließbare Zugang (10, 10a) durch eine Zugangskontrolleinheit (34) steuerbar ist, wobei die Zugangskontrolleinheit (34) den Zugang (10, 10a) des Zuliefer- und Abholbereichs (16) für einen weiteren, zweiten Bediener (18) erst dann freigibt, wenn die Zugangskontrolleinheit (34) registriert, dass der erste Bediener (18) den Zuliefer- und Abholbereich (16) verlassen hat.

4. Übergabezone nach Anspruch 3, **dadurch gekennzeichnet, dass** die Zugangskontrolleinheit (34) mit dem Regalbediengerät (19) und/oder einer bedienerseitigen Schranke (22) der zumindest einen Übergabestelle (17) und/oder einer Belegungserkennungsvorrichtung der zumindest einen Übergabestelle (17) in signaltechnischer Verbindung steht und dass die Zugangskontrolleinheit (34) den Zugang (10, 10a) des Zuliefer- und Abholbereichs (16) für einen weiteren, zweiten Bediener (18) erst dann freigibt, wenn
- das Regalbediengerät (19) sämtliche zugelieferten Warenpaletten (13) aus der zumindest einen Übergabestelle (17) abtransportiert hat oder
- jede Übergabestelle (17) mit darin befindlichen Warenpaletten (13) durch einen bedienerseitigen Schranken (22) vor Zugriff durch den zweiten Bediener (18) gesichert ist oder
- jeder unberechtigte Zugriff durch den zweiten Bediener (18) auf eine Warenpalette (13) in einer Übergabestelle (7) durch die Belegungserkennungs-vorrichtung erkennbar ist.

5. Übergabezone nach Anspruch 4, **dadurch gekennzeichnet, dass** die Belegungserkennungsvorrichtung in Form einer Lichtschranke ausgebildet ist, die die Belegung zumindest einer Übergabestelle (17) überwacht, wobei bei Belegung und bei unberechtigtem Zugriff ein entsprechendes Signal, vorzugsweise an die Zugangskontrolleinheit (34), ausgebbar ist.

6. Übergabezone nach einem der Ansprüche 3 bis 5, **dadurch gekennzeichnet, dass** die Zugangskontrolleinheit (34) Teil des Lagerverwaltungsrechners (24) ist.

7. Übergabezone nach einem der Ansprüche 4 bis 6, **dadurch gekennzeichnet, dass** die Übergabestellen (17) mittels eines regallagerseitigen Tores (21) einerseits und des bedienerseitigen Tores (22) andererseits abschließbar sind.

8. Übergabezone nach Anspruch 7, **gekennzeichnet durch** einen steuerbaren Schließmechanismus (23), der ein Öffnen des regallagerseitigen oder bedienerseitigen Tores (21, 22) einer Übergabestelle (17) nur dann erlaubt, wenn das jeweils andere Tor (22, 21) derselben Übergabestelle (17) geschlossen ist.

9. Übergabezone nach Anspruch 7 oder 8, **dadurch gekennzeichnet, dass** das regallagerseitige Tor (21) durch das Regalbediengerät (19) öffenbar ist und das bedienerseitige Tor (22) durch den Bediener (18) öffenbar.

10. Übergabezone nach Anspruch 8 oder 9, **dadurch gekennzeichnet, dass** durch die Zugangskontrolleinheit (34) der Schließmechanismus der Tore (21, 22) steuerbar ist.

11. Übergabezone nach einem der Ansprüche 6 bis 10, **dadurch gekennzeichnet, dass** durch den Lagerverwaltungsrechner (24) das Regalbediengerät (19) steuerbar ist.

12. Übergabezone nach einem der Ansprüche 1 bis 11, **dadurch gekennzeichnet, dass** der Zuliefer- und Abholbereich (16) einen vom Regallager (15) baulich und sicherheitstechnisch gesonderten, überdachten Übergaberaum (25) und einen umzäunten, über ein verschließbares Eingangstor (10a) zugänglichen Vorhof (35) aufweist.

13. Übergabezone nach Anspruch 12, **dadurch gekennzeichnet, dass** die Übergabestellen (17) im Übergaberaum (25) angeordnet sind, wobei die regallagerseitigen Tore (21) der Übergabestellen (17) den Übergaberaum (25) zum Regallager (15) hin abgrenzen.

14. Übergabezone nach einem der Ansprüche 1 bis 13, **dadurch gekennzeichnet, dass** die Übergabestellen (17) nischenförmig ausgebildet sind und Messbegrenzungen zur Konturkontrolle einer einstellbaren Warenpalette (13) aufweisen.

15. Übergabezone nach einem der Ansprüche 1 bis 14, **dadurch gekennzeichnet, dass** über einen Etikettenleser (7) Daten einer eingestellten Warenpalette (13) von einer an der Warenpalette (13) aufgebrachten Etikette (26) erfassbar sind und mit, den Übergabestellen (17) zugeordneten, Barcodes (5) rechnerisch verknüpfbar sind.

16. Regallager (15) mit
- einer Vielzahl von Lagerplätzen (20) und
- einer mit dem Regallager baulich verbundenen Übergabezone (12) nach einem der Ansprüche 1 bis 15.

## Claims

1. A transfer zone (12) for transferring goods pallets (13) between a delivery vehicle (14) and an in particular automatic rack storage (15), comprising
- an at least partially roofed-over delivery region for delivering goods pallets (13) by an operator (18), wherein the goods pallets (13) can be transported with a fork lift truck (8) between the delivery vehicle (14) and the transfer location,
- at least one transfer location (17) in which the goods pallets (13) can be transferred between the delivery region and the rack storage (15), and
- at least one rack storage operating device (19) by which goods pallets (13) can be transported between the at least one transfer location (17) and storage placements (20) in the rack storage (15),
**characterised in that** the delivery region is also in the form of a retrieval region for the retrieval of goods pallets (13) by the operator (18), wherein goods pallets (13) can be transported by the rack storage operating device (19) for retrieval to the at least one transfer location, said delivery and retrieval region (16) is secured against unauthorised admittance by a closable access (10, 10a), wherein the access (10, 10a) can be opened by the operator (18) by way of an admittance authorisation device, and an input terminal (6) connected to a storage management computer (24) is available to the operator (18) in the transfer zone (12), wherein the input terminal (6) has a keyboard or a touch screen.

2. A transfer zone according to claim 1 **characterised in that** the admittance authorisation device is in the form of a chip card or a keyboard for code input by which the access (10, 10a) can be opened.

3. A transfer zone according to claim 1 or claim 2 **characterised in that** the closable access (10, 10a) is controllable by an access control unit (34), wherein the access control unit (34) enables the access (10, 10a) to the delivery and retrieval region (16) for a further second operator (18) only when the access control unit (34) registers that the first operator (18) has left the delivery and retrieval region (16).

4. A transfer zone according to claim 3 **characterised in that** the access control unit (34) is in signal communication with the rack storage operating device (19) and/or an operator-side barrier (22) of the at least one transfer location (17) and/or an occupancy detection device of the at least one transfer location (17) and the access control unit (14) enables the access (10, 10a) of the delivery and retrieval region (16) for a further second operator (18) only when
- the rack storage operating device (19) has transported all delivered goods pallets (13) away from the at least one transfer location (17), or
- each transfer location (17) with goods pallets (13) therein is secured by an operator-side barrier (22) from access by the second operator (18), or
- any unauthorised access by the second operator (18) to a goods pallet (13) in a transfer location (7) can be detected by the occupancy detection device.

5. A transfer zone according to claim 4 **characterised in that** the occupancy detection device is in the form of a light barrier which monitors the occupancy at least of a transfer location (17), wherein upon occupancy and upon unauthorised access a corresponding signal can be outputted, preferably to the access control unit (34).

6. A transfer zone according to one of claims 3 to 5 **characterised in that** the access control unit (34) is part of the storage management computer (24).

7. A transfer zone according to according to one of claims 4 to 6 **characterised in that** the transfer locations (17) can be closed by means of a door (21) at the rack storage side on the one hand and the door (22) at the operator side on the other hand.

8. A transfer zone according to claim 7 **characterised by** a controllable closure mechanism (23) which allows opening of the door (21, 22) of a transfer location (17), at the rack storage side or the operator side, only when the respective other door (22, 21) of the same transfer location (17) is closed.

9. A transfer zone according to claim 7 or claim 8 **characterised in that** the door (21) at the rack storage side can be opened by the rack storage operating device (19) and the door (22) at the operator side can be opened by the operator (18).

10. A transfer zone according to claim 8 or claim 9 **characterised in that** the closure mechanism of the doors (21, 22) is controllable by the access control unit (34).

11. A transfer zone according to one of claims 6 to 10 **characterised in that** the rack storage operating device (19) is controllable by the storage management computer (24).

12. A transfer zone according to one of claims 1 to 11 **characterised in that** the delivery and retrieval region (16) has a roofed-over transfer space (25) which is separate from the rack storage (15) in structural and safety technology terms and a fenced-around forecourt (35) accessible by way of a closable entry door (10a).

13. A transfer zone according to claim 12 **characterised in that** the transfer locations (17) are arranged in the transfer space (25), wherein the doors (21) of the transfer locations (17), that are at the rack storage side, delimit the transfer space (25) towards the rack storage (15).

14. A transfer zone according to one of claims 1 to 13 **characterised in that** the transfer locations (17) are of a bay configuration and have dimensional limitations for contour control of an adjustable goods pallet (13).

15. A transfer zone according to one of claims 1 to 14 **characterised in that** data of a set goods pallet (13) can be detected by a label (26) applied to the goods pallet (13) by way of a label reader (7) and can be linked by computer means to the bar codes (5) associated with the transfer locations (17).

16. A rack storage (15) comprising
- a plurality of storage placements (20), and
- a transfer zone (12) according to one of claims 1 to 15, that is structurally connected to the rack storage.

## Revendications

1. Zone de transfert (12) servant à transférer des palettes de marchandises (13) entre un véhicule de livraison (14) et un système de stockage à rayonnages (15), en particulier automatique, comprenant
- une zone de livraison au moins en partie couverte servant à livrer des palettes de marchandises (13) par un utilisateur (18), sachant que les palettes de marchandises (13) peuvent être transportées avec un chariot-élévateur (8) entre le véhicule de livraison (14) et le poste de transfert,
- au moins un poste de transfert (17), au niveau duquel les palettes de marchandises (13) peuvent être transférées entre la zone de livraison et le système de stockage à rayonnages (15), et
- au moins un transstockeur (19), grâce auquel des palettes de marchandises (13) peuvent être transportées entre le poste de transfert (17) au moins au nombre de un et les emplacements de stockage (20) dans le système de stockage à rayonnages (15),
**caractérisée en ce que** la zone de livraison est également réalisée sous la forme d'une zone de retrait servant au retrait de palettes de marchandises (13) par l'utilisateur (18), sachant que des palettes de marchandises (13) peuvent être transportées par le transstockeur (19) aux fins du retrait au niveau du poste de transfert au moins au nombre de un, et **en ce que** lesdites zones de livraison et de retrait (16) sont protégées contre tout accès non autorisé par un accès (10, 10a) pouvant être fermé, sachant que l'accès (10, 10a) peut être ouvert par l'utilisateur (18) par l'intermédiaire d'un dispositif d'autorisation d'accès, et **en ce qu'**un terminal d'entrée (6) relié à un ordinateur de gestion des stocks (24) est mis à la disposition de l'utilisateur (18) dans la zone de transfert (12), sachant que le terminal d'entrée (6) présente un clavier ou un écran tactile.

2. Zone de transfert selon la revendication 1, **caractérisée en ce que** le dispositif d'autorisation d'accès est réalisé sous la forme d'une carte à puce ou d'un clavier servant à saisir un code, lesquels permettent d'ouvrir l'accès (10, 10a).

3. Zone de transfert selon la revendication 1 ou 2, **caractérisée en ce que** l'accès (10, 10a) pouvant être fermé peut être commandé par une unité de contrôle d'accès (34), sachant que l'unité de contrôle d'accès (34) ne libère l'accès (10, 10a) de la zone de livraison et de retrait (16) pour un deuxième utilisateur (18) supplémentaire uniquement lorsque l'unité de contrôle d'accès (34) enregistre que le premier utilisateur (18) a quitté la zone de livraison et de retrait (16).

4. Zone de transfert selon la revendication 3, **caractérisée en ce que** l'unité de contrôle d'accès (34) est reliée selon la technique des signaux au transstockeur (19) et/ou à une barrière (22), côté utilisateur, du poste de transfert (17) au moins au nombre de un et/ou à un dispositif de détection d'occupation du poste de transfert (17) au moins au nombre de un, et **en ce que** l'unité de contrôle d'accès (34) n'autorise l'accès (10, 10a) de la zone de livraison et de retrait (16) pour un deuxième utilisateur (18) supplémentaire que lorsque
- le transstockeur (19) a évacué toutes les palettes de marchandises (13) livrées du poste de transfert (17) au moins au nombre de un ou
- chaque poste de transfert (17), sur lequel se trouvent des palettes de marchandises (13), est protégé par une barrière (22) côté utilisateur empêchant l'accès par le deuxième utilisateur (18), ou
- tout accès non autorisé par le deuxième utilisateur (18) à une palette de marchandises (13) dans un poste de transfert (7) peut être détecté par le dispositif de détection d'occupation.

5. Zone de transfert selon la revendication 4, **caractérisée en ce que** le dispositif de détection d'occupation est réalisé sous la forme d'une barrière lumineuse, qui surveille l'occupation d'au moins un poste de transfert (17), sachant qu'en cas d'occupation et d'accès non autorisé, un signal correspondant peut être émis de préférence à l'unité de contrôle d'accès (34).

6. Zone de transfert selon l'une quelconque des revendications 3 à 5, **caractérisée en ce que** l'unité de contrôle d'accès (34) fait partie de l'ordinateur de gestion des stocks (24).

7. Zone de transfert selon l'une quelconque des revendications 4 à 6, **caractérisée en ce que** les postes de transfert (17) peuvent être fermés d'une part au moyen d'une porte (21) côté entrepôt à rayonnages et d'autre part au moyen d'une porte (22) côté utilisateur.

8. Zone de transfert selon la revendication 7, **caractérisée par** un mécanisme de fermeture (23) pouvant être commandé, lequel ne permet une ouverture de la porte (21, 22) côté entrepôt à rayonnages ou côté utilisateur d'un poste de transfert (17) que lorsque l'autre porte (22, 21) respective du même poste de transfert (17) est fermée.

9. Zone de transfert selon la revendication 7 ou 8, **caractérisée en ce que** la porte (21) côté entrepôt à rayonnages peut être ouverte par le transstockeur (19), et **en ce que** la porte (22) côté utilisateur peut être ouverte par l'utilisateur (18).

10. Zone de transfert selon la revendication 8 ou 9, **caractérisée en ce que** le mécanisme de fermeture des portes (21, 22) peut être commandé par l'unité de contrôle d'accès (34).

11. Zone de transfert selon l'une quelconque des revendications 6 à 10, **caractérisée en ce que** le transstockeur (19) peut être commandé par l'ordinateur de gestion des stocks (24).

12. Zone de transfert selon l'une quelconque des revendications 1 à 11, **caractérisée en ce que** la zone de livraison et de retrait (16) présente un espace de transfert (25) couvert, séparé de l'entrepôt à rayonnages (15) en termes de structure et de techniques de sécurité, ainsi qu'une avant-cour (35) clôturée, accessible par l'intermédiaire d'une porte d'entrée (10a) pouvant être fermée.

13. Zone de transfert selon la revendication 12, **caractérisée en ce que** les zones de transfert (17) sont disposées dans l'espace de transfert (25), sachant que les portes (21) côté entrepôt à rayonnages des postes de transfert (17) délimitent l'espace de transfert (25) en direction de l'entrepôt à rayonnages (15).

14. Zone de transfert selon l'une quelconque des revendications 1 à 13, **caractérisée en ce que** les zones de transfert (17) sont réalisées de manière à présenter une forme de niche et présentent des limites de mesure aux fins du contrôle de contour d'une palette de marchandises (13) pouvant être calée.

15. Zone de transfert selon l'une quelconque des revendications 1 à 14, **caractérisée en ce que** des données relatives à une palette de marchandises (13) calée peuvent être détectées par l'intermédiaire d'un lecteur d'étiquette (7) par une étiquette (26) apposée contre la palette de marchandises (13) et peuvent être combinées de manière informatique à des codes à barres (5) associés aux postes de transfert (17).

16. Entrepôt à rayonnages (15) comprenant
- une pluralité d'emplacements de stockage (20) et
- une zone de transfert (12) selon l'une quelconque des revendications 1 à 15, reliée en termes de structure à l'entrepôt à rayonnages.
